# EUROPÄISCHE PATENTSCHRIFT

(11) **EP 2 639 109 B1**
(45) Veröffentlichungstag und Bekanntmachung des Hinweises auf die Patenterteilung: **25.05.2016**
(21) Anmeldenummer: 13157590.4
(22) Anmeldetag: 04.03.2013
(51) Int. Cl.: B60R 1/00

(54) **Heckbereichssichtsystem**
Rear view system
Système de vision de la zone arrière

(30) Priorität: 15.03.2012 DE 102012005277
(43) Veröffentlichungstag der Anmeldung: 18.09.2013
(60) Teilanmeldung: 16163015.7
(73) Patentinhaber: MEKRA Lang GmbH & Co. KG, 91465 Ergersheim (DE)
(72) Erfinder: Dr. Lang, Werner, 91465 Ergersheim (DE); Kunz, Manuel, 97285 Röttingen (DE)
(74) Vertreter: Kramer Barske Schmidtchen Patentanwälte PartG mbB

(56) Entgegenhaltungen:
- EP-A2- 2 660 104
- WO-A1-2004/012456
- DE-A1-102005 043 411
- DE-T2- 60 031 011
- US-A1- 2002 167 589
- US-A1- 2006 287 825

## Beschreibung

Die vorliegende Erfindung betrifft ein Heckbereichssichtsystem für ein Fahrzeug, insbesondere für ein Nutzfahrzeug oder einen Kleintransporter bzw. ein solches Fahrzeug, bei dem eine direkte Sicht oder indirekte Sicht mittels eines Spiegels durch ein Heckfenster des Fahrzeugs in den hinter dem Fahrzeug liegenden Bereich nicht möglich ist.

Bei Kraftfahrzeugen, die ein Heckfenster haben, ist es üblich, dass ein Innenspiegel vorgesehen ist, mittels dessen der auf dem Fahrersitz sitzende Fahrer den hinter dem Fahrzeug liegenden Bereich einsehen kann, ohne sich umdrehen zu müssen. Wünscht er direkte Sicht, beispielsweise bei Rückwärtsfahrt, so ist dies durch das Vorhandensein des Heckfensters ebenfalls möglich.

Auch bei Nutzfahrzeugen oder Kleinlastwägen oder ähnlichem, die kein solches Heckfenster aufweisen, das eine direkte Sicht in den vollständigen hinter dem Fahrzeug liegenden Bereich ermöglicht, ist aus Sicherheitsgründen eine möglichst umfassende Sicht in den hinter dem Fahrzeug liegenden Bereich wünschenswert. Da eine Sicht durch den Heckbereich des Fahrzeugs versperrt bzw. nicht möglich ist, werden gewöhnlicher Weise Spiegel seitlich am Fahrzeug derart vorgesehen, dass sie einen möglichst guten Einblick in den hinter dem Fahrzeug liegenden Bereich geben.

Allerdings ist die indirekte Sicht mittels Außenspiegel in den hinter den Fahrzeug liegenden Bereich bei Nutzfahrzeugen bzw. Fahrzeugen ohne Heckfenster oftmals unzureichend und es sind tote Winkel vorhanden, d.h. solche Bereiche, in die der Fahrer nicht oder nur schlecht einsehen kann. Andererseits ist es beispielsweise gerade bei Rückwärtsfahrten oder beim Ansteuern von Laderampen oder ähnlichem mit einem Nutzfahrzeug nicht nur aus Sicherheitsaspekten sondern auch zur effizienten Handhabung des Be- und Entladevorgangs wünschenswert, den hinter dem Fahrzeug liegenden Bereich für den Fahrer zu jedem Zeitpunkt, auch wenn der Fahrer am Fahrersitz in normaler Position sitzt, gut einsehbar zu machen, so dass ihm beispielsweise ein Rückwärtsfahren erleichtert wird und er dennoch jeder Zeit den hinter dem Fahrzeug liegenden Bereich möglichst vollständig einsehen kann, so dass er z. B. in diesem Bereich vorhandene Hindernisse zuverlässig erkennen kann.

Um den Bereich des toten Winkels möglichst umfassend einsehbar zu machen, wird beispielsweise ein geteilter Außenspiegel eingesetzt, bei dem neben dem üblichen Außenrückspiegel ein zweiter Spiegel oder ein Spiegelsegment für die Überwachung des so genannten toten Winkelbereichs dient. Diese Spiegel sind in der Regel kleiner und gewähren somit nur eine Einsichtnahme in einen relativ kleinen Bereich des toten Winkels. Auch ist dieser Spiegel im Sinne eines Weitwinkelspiegels oftmals gewölbt, was gegenüber dem gewöhnlichen Außenspiegel zu einer Verzerrung führt und zur Folge hat, dass der Fahrer des Fahrzeugs Schwierigkeiten hat, Entfernungen oder relative Lagen von etwaigen Hindernissen in dem abgebildeten Bereich richtig einzuschätzen.

Daher wird in der DE 199 00 498 B4 ein Kamera- oder Bildsensorelementsystem zur Einsichtnahme des rückwärtigen, außenspiegelbezogenen Beobachtungsraums von Kraftfahrzeugen vorgeschlagen. Dabei wird der Beobachtungsraum über Kamera- oder Bildsensorelemente erfasst und auf einem Bildschirm abgebildet. Der Beobachtungsraum beinhaltet sowohl einen geradlinig nach hinten gerichteten Bereich als auch einen toten Winkelbereich. Der tote Winkelbereich wird in einem größeren Winkelbereich erfasst als der geradlinig nach hinten gerichtete Bereich und die beiden Bereiche werden in einem umgekehrt proportionalen Breitenverhältnis nebeneinander auf einem Bildschirm angezeigt.

Aus der DE 600 31 011 T2 ist ein Fahrassistenzsystem für Fahrzeuge bekannt, bei dem mittels einer Kameraeinheit, die am Heckteil eines Fahrzeugs befestigt ist, ein Bild des hinter dem Fahrzeug liegenden Bereichs aufgezeichnet wird. Dieses von der Kameraeinheit aufgezeichnete Bild wird auf einer Informationsanzeigevorrichtung im Innenraum des Fahrzeugs dargestellt, wobei dem Bild eine prognostizierte Fahrwegverlaufskurve und Linien überlagert sind, die die Linien verlängern, die beide Seiten des Fahrzeugs begrenzen. Dadurch erfolgt eine Parkunterstützung für den Fahrer. Wenn die Kameraeinheit so angeordnet ist, dass in ihrem Sichtfeld ein Teil der Fahrzeugkarosserie des Fahrzeugs enthalten ist, ist dieser Teil der Fahrzeugkarosserie auf dem in der Informationsanzeigevorrichtung dargestellten Bild ebenfalls enthalten.

Aus der DE 10 2005 043 411 A1 ist ein Stereooptiksystem bekannt, das mindestens einen Bildsensor zur Aufnahme von Bilddaten und mindestens zwei Abbildungsarme umfasst, wobei jeder der mindestens zwei Abbildungsarme mindestens ein Frontlinsensystem und mindestens ein Abbildungslinsensystem umfasst. Jeder der Abbildungsarme umfasst weiter mindestens ein Spiegelsystem zur Umlenkung eines Strahlengangs von durch das mindestens eine Frontlinsensystem eintretenden Lichtstrahlen auf dem mindestens einen Bildsensor.

Die US 2002/0167589 A1 offenbart ein Rückblicksystem für ein Fahrzeug mit wenigstens zwei Bilderfassungseinrichtungen, die am Fahrzeug positioniert und im Allgemeinen in Bezug auf die Fahrrichtung des Fahrzeugs rückwärts gerichtet sind, und einem Anzeigesystem, das ein Bild anzeigt, das von den Ausgaben der genannten Bilderfassungsvorrichtungen synthetisiert wird. Das synthetisierte Bild entspricht in etwa einer hinten gelegenen Panoramaansicht von einem einzelnen Ort aus, im Wesentlichen ohne überflüssige Duplikatbilder von Objekten.

### Aus der nächst kommenden

US 2006/0287825 ist ein Fahrerassistenzsystem für Fahrzeuge bekannt, das eine Kamera aufweist, die dazu ausgebildet ist, einen sich hinter dem Fahrzeug befindlichen Bereich zu erfassen. Das darin offenbarte Fahrerassistenzsystem weist ferner eine Wiedergabeeinheit zum Darstellen des von der Kamera aufgenommenen Bilds, Lenkwinkelerfassungsmittel zum Erfassen des Lenkwinkels, Fahrwegvoraussagungsmittel zum Voraussagen des Fahrwegs des Fahrzeugs auf der Basis des Lenkwinkels und Fahrerassistenzmittel zum Überlagern von Fahrerassistenzinformationen auf den Wiedergabeeinheiten auf, die den Fahrweg voraussagen. Das System ist derart angepasst, dass das durch die Aufnahmeeinheit erzeugte und durch die Bildverarbeitungseinheit verarbeitete Bild ein Bild eines virtuellen Sichtkegels ist, das aus dem Bild des aufgenommenen Sichtkegels erzeugt ist und das Bild ist vor der Wiedergabe durch die Wiedergabeeinheit derart modifiziert, dass ein Fahrzeugbezug in dem angezeigten Bild vorhanden ist.

Davon ausgehend ist es Aufgabe der Erfindung, ein Heckbereichssichtsystem für ein Fahrzeug vorzuschlagen, mit dem nicht nur der Heckbereich eines Fahrzeugs, bei dem eine direkte Sicht für einen auf einem Fahrersitz sitzenden Fahrer in den hinter dem Fahrzeug liegenden Bereich nicht möglich ist, möglichst umfassend eingesehen werden kann, sondern bei dem gleichzeitig auch das Heckbereichssichtsystem derart ergonomisch gestaltet ist, dass es vom Fahrer des Fahrzeugs möglichst ohne Eingewöhnungs- oder Anpassungszeit auf natürliche Weise genutzt werden kann.

In der Beschreibung dieser Erfindung beziehen sich Richtungsangaben auf ein Kraftfahrzeug bei normaler Vorwärtsfahrt. In seitlicher Richtung bedeutet somit diejenige Richtung, die entlang der Senkrechten zu einem Vorwärtsfahrtrichtungsvektor des Kraftfahrzeugs ist und der Links-Rechts-Richtung entspricht.

### Darstellung der Erfindung

Die oben angegebene Aufgabe wird durch ein Heckbereichssichtsystem für ein Fahrzeug mit dem Merkmalen des Anspruchs 1 gelöst, das somit eine Aufnahmeeinheit zum Aufnehmen eines Sichtkegels für zumindest einen Teil eines hinter dem Fahrzeug liegenden Bereichs hat, eine Wiedergabeeinheit zum Wiedergeben des durch die Aufnahmeeinheit erzeugten Bilds, welche das Bild für den Fahrer des Fahrzeugs einsehbar anzeigt, und das derart angepasst ist, dass das durch die Aufnahmeeinheit erzeugte Bild ein Bild eines virtuellen Sichtkegels ist, das einem Bild entspricht, das bei einem Zurückblicken aus dem Fahrzeug und angenommener unbehinderter Sicht entsteht, und das aus dem Bild des aufgenommenen Sichtkegels erzeugt ist und das vor der Wiedergabe durch die Wiedergabeeinheit durch Einblenden oder Überlagern eines virtuellen fahrzeugsfesten Elements in das durch die Aufnahmeeinheit erzeugte und durch die Bildverarbeitungseinheit verarbeitete Bild derart modifiziert ist, dass zumindest ein Fahrzeugbezug in dem angezeigten Bild vorhanden ist. In ein von der Aufnahmeeinheit aufgenommenes Bild wird somit vor der Neuanzeige durch die Wiedergabeeinheit ein zusätzlich virtueller Fahrzeugbezug durch eine Bildverarbeitungseinheit überblendet, der im durch die Aufnahmeeinheit aufgenommenen Bild nicht vorhanden war. Der virtuelle Fahrzeugbezug kann dabei ein vollkommen virtuell generiertes Bild des Fahrzeugs bzw. markanten Positionen des Fahrzeugs entsprechende Orientierungslinien oder -flächen oder aber ein durch die Kameraeinheit im Voraus aufgenommenes und abgespeichertes Bild sein.

Durch das Anzeigen eines Fahrzeugbezugs in dem angezeigten Bild wird es dem Fahrer ermöglicht, wenn er das Bild sieht, zu verstehen und wahrzunehmen, aus welcher Perspektive das angezeigte Bild generiert ist. Damit ist ihm die Orientierung wesentlich erleichtert, insbesondere wenn es beispielsweise um Rückwärtsfahren oder Ähnliches geht, und der Fahrer als Fahrzeugbezug beispielsweise die Heckkante oder eine Laderampe eines Nutzfahrzeugs eingeblendet hat.

Somit ist es möglich, den Bereich hinter einem Fahrzeug, der gewöhnlich im toten Winkel liegt, bei einem Fahrzeug ohne direkte Heckeinsichtmöglichkeit derart anzuzeigen, dass eine Orientierung auf der Basis des angezeigten Bilds unmittelbar möglich ist und beispielsweise das angezeigte Sichtfeld und die Perspektive denen der Verwendung eines Innenspiegels, wie er gewöhnlicher Weise im PKW verwendet wird, entsprechen und somit das gezeigte Bild bekannten Sichtperspektiven entspricht.

Somit wird die angezeigte Projektion des virtuellen Sichtkegels im Wesentlichen der Projektion des Sichtkegels eines im Nutzfahrzeug bzw. Fahrzeug ohne direkte Hecksichtmöglichkeit an der Position der Einrichtung zur Bildwiedergabe angeordneten planen Innenspiegels angepasst, die dann entstünde, wenn das Fahrzeug imaginär derart modifiziert wäre, dass sich im Sichtkegel des Innenspiegels keine intransparenten Körper befinden, und der Flächenvektor des Innenspiegels im Wesentlichen dem Flächenvektor der Anzeigefläche der Einrichtung zur Bildwiedergabe entspricht.

Der Erfindung liegt somit die Idee zu Grunde, durch Aufnahme von mindestens einem geeigneten Bild mit einem realen Sichtkegel und geeignete Bildverarbeitung einen virtuellen Sichtkegel und eine Abbildung dieses virtuellen Sichtkegels zu erzeugen, die dem entspricht, der bei einem Zurückblicken (nach hinten) aus dem Fahrzeug und angenommener unbehinderter Sicht entsteht, also der Erzeugung einer virtuellen Perspektive eines virtuellen Innenspiegels.

Vorteilhafte Ausführungsformen sind in den abhängigen Ansprüchen angegeben.

In einer vorteilhaften Ausgestaltung erfasst die Aufnahmeinheit einen Sichtkegel, der sich von einem oberen, in seitlicher Richtung mittig liegenden Heckbereich des Fahrzeugs nach hinten, unten und in seitlicher Richtung außen öffnet. Mit einer solchen Aufnahmeeinheit, die beispielweise eine Kamera oder ein Bildsensor ist, kann der ohne Verwenden eines Sichtsystems nicht einsehbare Bereich hinter dem Fahrzeug, der auch einen toten Winkel enthält, abgebildet werden.

Alternativ erfasst die Aufnahmeeinheit einen Sichtkegel, der sich von einem in seitlicher Richtung mittig liegenden Heckbereich des Fahrzeugs nach hinten, in seitlicher Richtung außen und nach oben und unten öffnet. Auch dadurch ist die Abbildung des hinter dem Fahrzeug liegenden Bereichs, einschließlich eines toten Winkelbereichs, möglich.

In vorteilhaften Ausgestaltungen ist die Aufnahmeeinheit eine Kamera, möglicherweise mit Weitwinkeleinrichtung oder ein anderweitiger Bildsensor, der vorzugsweise dauerhaft, das heißt zumindest bei angeschalteter Zündung des Fahrzeugs ununterbrochen, Bilder erfasst und an eine Verarbeitungseinheit im Fahrzeug liefert, welche dann wiederum die erhaltenen Daten entsprechend den Merkmalen von Anspruch 1 umwandelt, um ein angezeigtes Bild zu erzeugen und anzuzeigen.

In einer vorteilhaften Ausgestaltung geschieht die Modifikation des aufgenommenen Bilds durch die Überlagerung eines virtuellen Fahrzeugheckbereichs oder eines Bilds eines Fahrzeugheckbereichs. Mit Fahrzeugheckbereich ist dabei ein Teil des Fahrzeugs gemeint, wie beispielsweise eine Laderampe, ein virtueller Endrand des Fahrzeugs, den man sehen würde, wenn man aus dem Laderaum eines Nutzfahrzeugs in den hinter dem Fahrzeug liegenden Bereich blickt, oder ähnliches. Beispielsweise ist auch möglich, um bei Rückwärtsfahrt eines Nutzfahrzeugs an Be- und Entladepositionen die Orientierung für den Fahrer zu erleichtern, als Fahrzeugbezug eine geöffnete Laderampe einzublenden. Wenn ein solcher Fahrzeugbezug, der vorgespeichert ist, verwendet wird, so kann dies entweder ein vollständig virtuell erzeugtes Bild sein, d.h. ein Modell eines Teils des Fahrzeughecks, oder aber ein (einmalig) im Voraus aufgenommenes Bild, das abgespeichert und dem aktuell erzeugten Bild der Aufnahmeeinheit überlagert wird. Es ist auch denkbar, dass das vorher aufgenommene Bild bzw. Modellbild, welches überlagert wird, abhängig von der Fahrsituation gewählt wird, so dass z. B. bei Rückwärtsfahrt eine geöffnete Laderampe überblendet wird, während in anderen Fahrtzuständen eine fensterartige Öffnung des Fahrzeughecks simuliert wird. Hierzu wird eine Bearbeitungseinheit, die das angezeigte Bild aus dem aufgenommenen Sichtkegel durch Überlagerung des Fahrzeugbezugs erzeugt, vorzugsweise mit zusätzlicher Information von weiteren Sensoren für den Fahrzeugzustand versorgt.

Alternativ dazu geschieht die Modifikation des durch die Aufnahmeeinheit aufgenommenen Sichtkegels dadurch, dass die Aufnahmeeinheit mehrere Aufnahmebaugruppen enthält, so dass neben der Aufnahmebaugruppe für den Sichtkegel zur Einsichtnahme in den toten Winkelbereich und den hinter dem Fahrzeug liegenden Bereich eine weitere Aufnahmebaugruppe vorgesehen ist, die einen weiteren Sichtkegel erfasst, welcher einen Fahrzeugbezug erfasst, indem er derart gerichtet ist, dass er einen Teil des Heckbereichs des Fahrzeugs mitaufnimmt. Statt eine weitere Aufnahmebaugruppe vorzusehen, ist es auch möglich, dass eine einzige Aufnahmeeinheit mehrere unterschiedliche Sichtkegel erfassen kann, beispielsweise durch eine Mehrfachlinsenanordnung. Die beiden erfassten Sichtkegel werden dann durch eine Bearbeitungseinheit einander überlagert, so dass das Sichtkegelbild, das für den hinter dem Fahrzeug liegenden Bereich verwendet wird, mit Information bezüglich des Fahrzeugheckbereichs aus dem zweiten Sichtkegel ergänzt wird. Anders als bei einem vorgefertigten Bild wird somit auch der Fahrzeugbezug an die jeweilige Situation und den Fahrzeugzustand angepasst, so dass beispielsweise bei einem Nutzfahrzeug ohne weitere Sensoren zwischen einem Zustand mit geöffneter Laderampe und einem Zustand mit geschlossener Laderampe unterschieden werden kann.

Werden durch eine Anordnung mit einem Multi-Lens-System oder durch mehrere Aufnahmebaugruppen unterschiedliche Sichtkegel erfasst, das heißt wird eine Kameraeinheit mit einem Multi-Lens-Array vorgesehen bzw. mehrere getrennte Kameras oder andere Bilderfassungseinheiten vorgesehen, so sind diese vorzugsweise derart angeordnet und -gerichtet, dass die erfassten Sichtkegel überlappen. Dies bietet den Vorteil, dass der Heckbereich des Fahrzeugs sowie der hinter dem Fahrzeug liegende Bereich nahtlos dargestellt werden können und zu einem einzigen, für die Sinne des Menschen natürlich erscheinenden Bild verschmolzen werden können.

Vorzugsweise liegen dabei die Mittelachsen der Sichtkegel in einer Ebene, was insbesondere die Berechnung des virtuellen Bilds erleichert.

Nach einer bevorzugten Ausgestaltung ist die Wiedergabeeinheit im Fahrzeug derart angeordnet, dass sie unter Berücksichtigung verschiedener Sitzpositionen des Fahrers auf Höhe der Frankfurter Horizontalen (Deutsche Horizontale) oder darüber für das 95. Perzentil bezüglich der Aughöhe im Sitzen einer Person auf dem Fahrzeug liegt. Die Frankfurter Horizontale ist diejenige gedachte Linie, die den höchsten Punkt des menschlichen Ohrs mit dem niedrigsten Punkt des Augsockels verbindet. Diese Position entspricht der für die meisten Fahrer gewohnten Position eines Innenspiegels in Fahrzeugen, wie z. B. in PKWs.

Nach einer bevorzugten Ausgestaltung ist die Wiedergabeeinheit ähnlich wie ein Innenspiegel verstellbar um einen Drehpunkt im Fahrzeug angeordnet. Dadurch kann der Fahrer sich die Position der Wiedergabeeinheit nach seinen Bedürfnissen angepasst einrichten.

Nach einer weiteren bevorzugten Ausführungsform ist bei einer um einen Drehpunkt verstellbar im Fahrzeug angeordneten Wiedergabeeinheit auch die Mittelachse des virtuellen Sichtkegels veränderbar und zwar derart, dass sie der jeweiligen Position der Wiedergabeeinheit folgt, so dass ähnlich wie bei einem Spiegel, leicht unterschiedliche Sichtkegel abgebildet werden können. Diese zeigen jedoch vorzugsweise immer den hinter dem Fahrzeug liegenden Bereich, einschließlich des toten Winkelbereichs.

Nach einer weiteren bevorzugten Ausgestaltung kann in das Heckbereichsystem eine Kollisionswarneinrichtung integriert sein, die ein Hindernis durch Bildverarbeitung erfasst, das im erfassten Sichtkegel ist, und die dann eine Warnung für den Fahrer ausgibt. Die Warnung kann beispielsweise eine akustische Warnung oder eine visuelle Warnung durch Hervorheben des Hindernisses im angezeigten Bild sein.

### Kurze Beschreibung der Figuren

Nachfolgend wird die Erfindung rein beispielhaft anhand der beigefügten Figuren beschrieben, in denen:
- Fig. 1: eine schematische Ansicht eines Nutzfahrzeugs ist, die die der Erfindung zugrunde liegende Idee veranschaulicht;
- Fig. 2: eine schematische Ansicht eines erfindungsgemäßen Heckbereichssichtsystems ist;
- Fig. 3: ein Nutzfahrzeug mit einem Heckbereichssichtsystem in einer Ausführungsform der Erfindung zeigt;
- Fig. 4: eine weitere Ausführungsform des erfindungsgemäßen Heckbereichssichtsystem veranschaulicht; und
- Fig. 5: noch eine weitere Ausführungsform des erfindungsgemäßen Heckbereichssichtsystems veranschaulicht.

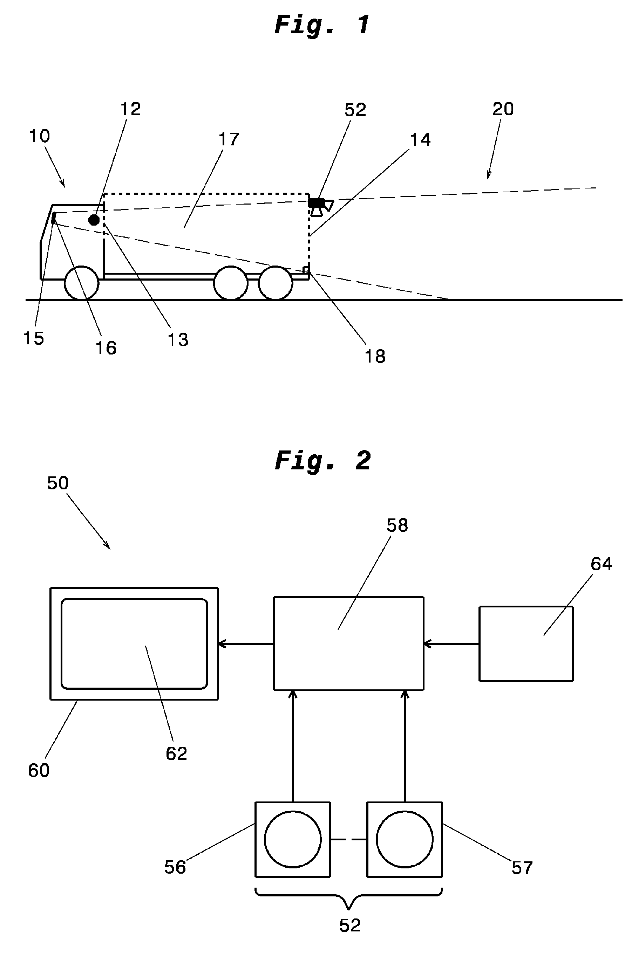

Fig. 1 zeigt ein Nutzfahrzeug als Beispiel für ein Fahrzeug 10, bei dem ein erfindungsgemäßes Heckbereichssichtsystem 50 vorteilhaft eingesetzt werden kann, da gewöhnlicher Weise derartige Nutfahrzeuge keine Möglichkeit zu einer direkten Sicht aus der Fahrerkabine in den hinter dem Fahrzeug liegenden Bereich 20 haben. Außer für Nutzfahrzeuge kann das erfindungsgemäße Heckbereichssichtsystem 50 somit vorteilhaft für alle Fahrzeuge eingesetzt werden, bei denen zumindest in bestimmten Fahr- oder Beladungssituationen eine direkte Sicht durch beispielsweise ein Heckfenster in den hinter dem Fahrzeug liegenden Bereich 20 nicht möglich oder versperrt ist.

Fig. 1 veranschaulicht die der Erfindung zugrunde liegende Idee, dass bei dem Fahrzeug 10, bei dem ein hinter dem Fahrzeug liegender Bereich 20 auf Grund intransparenter Strukturen im Fahrzeugheckbereich eigentlich nicht einsehbar ist, angenommen wird, dass eine Sicht durch den Heckbereich des Fahrzeugs für einen auf einem Fahrersitz sitzenden Fahrer mit einem Augpunkt 12 durch z. B. angenommene, virtuelle, transparente Heckscheiben 13, 14 und entsprechend keine oder durchsichtige Beladung möglich ist. Dies bedeutet, dass der hinter dem Fahrzeug liegende Bereich 20 in einem virtuellen Innenspiegel 15 auf dessen Spiegelfläche 16 durch Abbilden des Sichtkegels 17 sichtbar wäre. Dadurch, dass eine Fahrzeugheckkante 18 in dem virtuellen Sichtkegel 17 liegt, würde diese, ebenfalls ähnlich wie bei einem Innenspiegel eines PKWs, auf der Spiegelfläche 16 des virtuellen Innenspiegels 15 abgebildet werden.

Da in der Praxis das Heckbereichssichtsystem 50 gerade für solche Fahrzeuge sein soll, bei denen keine Sicht in den Heckbereich des Fahrzeugs 10 bzw. den hinter dem Fahrzeug liegenden Bereich 20 möglich ist, wird das erfindungsgemäße Heckbereichssichtsystem 50 vorgeschlagen, das durch geeignete Mittel, die nachfolgend beschrieben werden, diese Idee für solche Fahrzeuge realisiert.

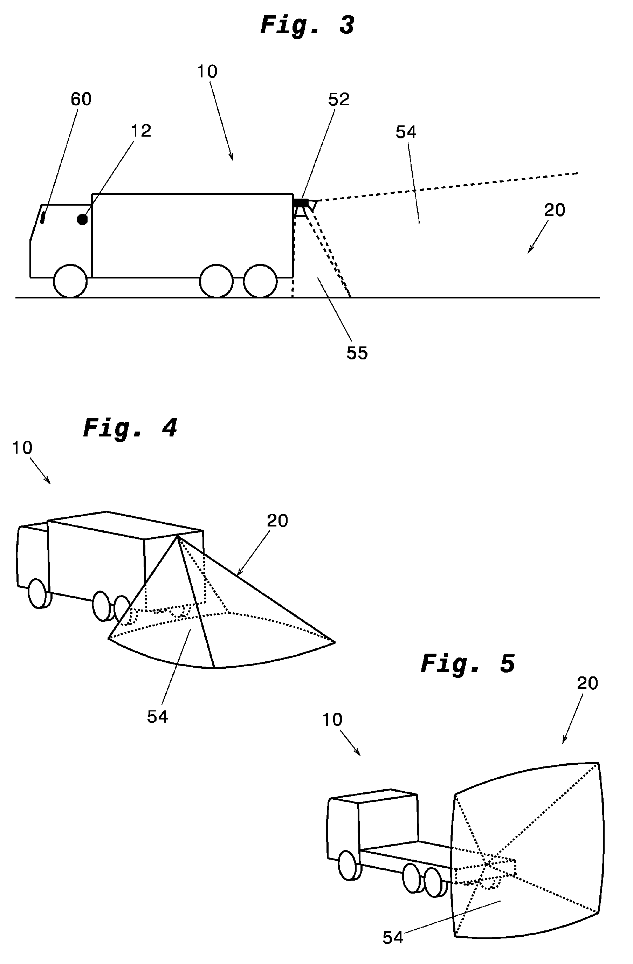

Das Heckbereichssichtsystem 50 der Erfindung enthält mindestens eine Aufnahmeeinheit 52 zum Aufnehmen eines Sichtkegels 54, der zumindest einen Teil eines hinter dem Fahrzeug liegenden Bereichs 20 erfasst. Wie in Fig. 2 und 3 gezeigt, kann die Aufnahmeeinheit 52 dabei angepasst sein, zwei unterschiedliche Sichtkegel 54, 55 in dem hinter dem Fahrzeug liegenden Bereich 20 zu erfassen, was beispielsweise dadurch möglicht ist, dass mehrere Aufnahmebaugruppen 56, 57 vorgesehen sind, die jeweils als einzelne Kameraeinheiten gebildet sind, oder dass die Aufnahmeeinheit 52 einen Multi-Lens-Array umfasst. Beispielsweise kann ein Kameraöffnungswinkel einer solchen Aufnahmeeinheit im Bereich von 70° bis 120° liegen, abhängig davon, wie die Anordnung der Kamera bzw. Aufnahmeeinheit 52 am Fahrzeug ist.

Das Heckbereichssichtsystem 50 umfasst ferner eine Bildverarbeitungseinheit 58, in die die Daten der Aufnahmeeinheit 52 eingegeben werden. Die Bildverarbeitungseinheit 58 verarbeitet das durch die Aufnahmeeinheit 52 erzeugte Bild des virtuellen Sichtkegels 54 derart, dass zumindest ein Fahrzeugbezug in dem auf der Wiedergabeeinheit 60 anzuzeigenden Bild 62 vorhanden ist. Dieser Fahrzeugbezug kann beispielsweise eine Überlagerung einer Darstellung der Fahrzeugheckkante 18 (siehe Fig. 1) sein, die im Voraus in einem Speicher 64 abgespeichert ist und dem durch die Aufnahmeeinheit 52 aufgenommenen und umgerechneten Bild überlagert wird.

Anstatt eine Fahrzeugkante 18 in das Bild einzublenden bzw. zu überlagern, können auch andere fahrzeugfeste Elemente nach Belieben gewählt werden, beispielsweise eine Laderampe oder Ähnliches. Dabei ist es auch denkbar, die Laderampe in Abhängigkeit von der tatsächlichen Situation am Fahrzeug darzustellen, beispielweise wenn die Laderampe geöffnet ist, sie geöffnet darzustellen oder ähnliches. Auch ist es möglich, die Laderampe, obwohl sie im Nutzfahrzeug 10 tatsächlich geschlossen ist, als geöffnet in das durch die Aufnahmeeinheit 52 erzeugte Bild zu überlagern, so dass dem Fahrer beim Rückwärtsfahren an eine Ladeposition erleichtert wird, den zugehörigen Abstand bzw. die Position des Nutzfahrzeugs 10 bezüglich der Ladegegebenheiten einzuschätzen.

Statt ein vorher generiertes Bild, das ein tatsächlich aufgenommenes Bild sein kann oder ein virtuell erzeugtes Bild (Modell) sein kann, dem durch die Aufnahmeeinheit 52 überlagerten Bild zu überlagern, ist es bei einem System, das mehrere Aufnahmebaugruppen 56, 57 enthält bzw. das angepasst ist, mehrere Sichtkegel 54, 55 darzustellen, auch möglich, dass einer der Sichtkegel 55 derart gewählt ist, dass ein Heckbereich eines Fahrzeugs mit abgebildet wird und dadurch der Fahrzeugbezug hergestellt wird. In diesem Fall überlagert die Bildverarbeitungseinheit 58 die Sichtkegel 54, 55 einander zum Erzeugen eines einzigen Bilds aus einer gemeinsamen Perspektive, so dass dem Fahrer wiederum das Gefühl gegeben wird, er würde in der Fahrerkabine sitzend (Augpunkt 12 in Fig. 3) in einen Innenspiegel blicken, der mittels der Wiedergabeeinheit 60 realisiert ist, und dort ein Bild vorfinden, das dem entspricht, das er sehen würde, wenn die Wiedergabeeinheit 60 ein Spiegel wäre und er durch die Fahrerkabine und gegebenenfalls sich anschließende Heckbereiche des Fahrzeugs 10 im Wesentlichen ungehinderte Sicht auf den hinter dem Fahrzeug liegenden Bereich 20 hätte, wie es in Verbindung mit Fig. 1 erläutert ist.

Werden mehrere Sichtkegel 54, 55 erfasst, so ist es bevorzugt, dass die erfassten Sichtkegel 54, 55 überlappen, da dadurch ein möglichst durchgehendes Bild des hinter dem Fahrzeug liegenden Bereichs 20 aufgenommen werden kann und dargestellt werden kann. Ferner ist es in diesem Fall wünschenswert, dass die Mittelachsen der Sichtkegel 54, 55 in einer gemeinsamen Ebene liegen, d. h. sich schneiden, was die Bildverarbeitung in der Bildverarbeitungseinheit 58 vereinfacht.

Die Wiedergabeeinheit 60 ist in der Fahrerkabine bzw. im Fahrzeug wie in Fig. 3 gezeigt vorzugsweise derart angebracht, dass sie für das 95. Perzentil auf Höhe der Frankfurter Horizontalen (Deutsche Horizontale, d. h. diejenige imaginäre Linie, die den niedrigsten Punkt des Augsockels mit dem höchsten Punkt des Ohrs verbindet) oder darüber liegt. Dies führt dazu, dass der Fahrer ergonomische Gegebenheiten insofern vorfindet, als er sich an einer gewöhnlichen Position für einen Innenspiegel in einem PKW orientieren kann und dort das gleiche Bild sieht, das er bei einem Zurückblicken mit Hilfe des Innenspiegels des PKWs sehen würde.

Die Wiedergabeeinheit 60 ist vorzugsweise in der Fahrerkabine bzw. im Fahrzeug 10 um einen Drehpunkt verstellbar angeordnet, so dass der Fahrer sich eine gut einsehbare Position für seinen persönlichen Augpunkt 12 fein einstellen kann.

Die Drehung der Wiedergabeeinheit 60 bzw. deren Position wird in diesem Fall vorzugsweise durch einen Sensor (nicht dargestellt) erfasst, der die entsprechende Information wiederum an die Bildverarbeitungseinheit 58 gibt. Die Bildverarbeitungseinheit 58 kann dazu angepasst sein, das Bild, das sie an die Wiedergabeeinheit 60 zur Darstellung liefert, derart zu modifizieren, dass es der Drehposition der Anzeige der Wiedergabeeinheit 60 entspricht, so dass das anzuzeigende Bild ähnlich dem Einstellen eines Innenspiegels justiert wird. Dies bedeutet, dass die Mittelachse des virtuellen Sichtkegels 17, der auf der Wiedergabeeinheit 60 gezeigt wird, der Drehposition der Wiedergabeeinheit 60 angepasst ist.

Nach einer bevorzugten Ausführungsform ist es auch möglich, eine Kollisionswarneinrichtung vorzusehen, welche derart gestaltet ist, dass die Bildverarbeitungseinheit 58 ein Hindernis im hinter dem Fahrzeug liegenden Bereich 20 erfasst und, wenn ein solches Hindernis erfasst wird, ein Signal an beispielsweise die Wiedergabeeinheit 60 ausgibt, welche das Signal als akustische oder optische Warnung an den Fahrer gibt.

Wie es in Fig. 3 dargestellt ist, kann die Aufnahmeeinheit 52 an einem mittleren oberen Heckbereich des Fahrzeugs 10 angebracht sein, so dass der aufgenommene Sichtkegel 54 sich nach hinten und unten sowie seitlich nach links und rechts im Wesentlichen öffnet. Dies ist auch in Fig. 4 dargestellt. Alternativ dazu ist es aber auch möglich, beispielsweise je nachdem was für eine Art von Fahrzeug vorliegt, eine Aufnahmeeinheit 52 an einem hinteren unteren Heckbereich des Fahrzeugs 10 anzubringen, so dass der Sichtkegel 54 sich nach hinten, in seitlicher Richtung nach links und rechts sowie in Hoch- und Tiefrichtung nach oben und unten öffnet. Dies ist in Fig. 5 gezeigt.

In jedem Fall kann auf der Wiedergabeeinheit 60 damit ein anzuzeigendes Bild 62 durch das Heckbereichssichtsystem 50 erzeugt werden, was einem Bild entspricht, das ein auf einem Fahrersitz sitzender Fahrer in einem virtuellen Innenspiegel 15 sehen würde, wenn das Fahrzeug im Heckbereich transparent wäre und keine Hindernisse durch das Fahrzeug bzw. dessen Ladung vorhanden wären.

### Bezugszeichenliste

- 10: Fahrzeug
- 12: Augpunkt des Fahrers
- 13: transparente virtuelle Heckscheibe
- 14: transparente virtuelle Heckscheibe
- 15: virtueller Innenspiegel
- 16: virtuelle Spiegelfläche
- 17: virtueller Sichtkegel
- 18: Fahrzeugheckkante
- 20: hinter dem Fahrzeug liegender Bereich
- 50: Heckbereichssichtsystem
- 52: Aufnahmeeinheit
- 54: Sichtkegel
- 55: Sichtkegel
- 56: Aufnahmebaugruppe
- 57: Aufnahmebaugruppe
- 58: Bildverarbeitungseinheit
- 60: Wiedergabeeinheit
- 62: anzuzeigendes Bild
- 64: Speicher

## Patentansprüche

1. Heckbereichssichtsystem (50) für ein Fahrzeug mit
einer Aufnahmeeinheit (52) zum Aufnehmen eines Sichtkegels (54) für zumindest einen Teil eines hinter dem Fahrzeug liegenden Bereichs (20),
einer Wiedergabeeinheit (60) zum Wiedergeben des durch die Aufnahmeeinheit (52) erzeugten Bildes, welche ein Bild (62) für den Fahrer des Fahrzeugs einsehbar anzeigt, wobei das System (50) derart angepasst ist, dass das durch die Aufnahmeeinheit (52) erzeugte und durch die Bildverarbeitungseeinheit (58) verarbeitete Bild ein Bild eines virtuellen Sichtkegels (17) ist, das einem Bild entspricht, das bei einem Zurückblicken aus dem Fahrzeug und angenommener unbehinderter Sicht entsteht, und das aus dem Bild des aufgenommenen Sichtkegels (54) erzeugt ist, das vor der Wiedergabe durch die Wiedergabeeinheit (60) durch Einblenden oder Überlagern eines virtuellen fahrzeugfesten Elements in das durch die Aufnahmeeinheit (52) erzeugte und durch die Bildverarbeitungseinheit (58) verarbeitete Bild derart modifiziert ist, dass zumindest ein Fahrzeugbezug in dem angezeigten Bild vorhanden ist, so dass es dem Fahrer des Fahrzeugs ermöglicht wird, wenn er das Bild sieht, zu verstehen und wahrzunehmen, aus welcher Perspektive das angezeigte Bild generiert ist.

2. Heckbereichssichtsystem (50) nach Anspruch 1, wobei die Modifikation des aufgenommenen Bilds derart ist, dass die Bildverarbeitungseinheit (58) ein virtuelles Bild (62) mit einem virtuellen Sichtkegel (17) erzeugt, der dem eines Fahrzeuginnenspiegels bei angenommener unbehinderter Sicht nach hinten aus dem Fahrzeug (10) entspricht.

3. Heckbereichssichtsystem (50) nach Anspruch 1 oder 2, wobei die Aufnahmeeinheit einen Sichtkegel (54) erfasst, der sich von einem oberen, in seitlicher Richtung mittig liegenden Heckbereich des Fahrzeugs (10) nach hinten, unten und in seitlicher Richtung außen öffnet.

4. Heckbereichssichtsystem (50) nach Anspruch 1 oder 2, wobei die Aufnahmeeinheit einen Sichtkegel (54) erfasst, der sich von einem in seitlicher Richtung mittig liegenden Heckbereich des Fahrzeugs (10) nach hinten, in seitlicher Richtung außen und oben und unten öffnet.

5. Heckbereichssichtsystem (50) nach einem der vorhergehenden Ansprüche, wobei die Modifikation des aufgenommenen Bilds durch die Überlagerung eines virtuellen Fahrzeugheckbereichs (18) oder eines Bilds eines Fahrzeugheckbereichs (18) erfolgt.

6. Heckbereichssichtsystem (50) nach einem der Ansprüche 1 bis 4, wobei die Modifikation des aufgenommenen Bilds dadurch geschieht, dass die Aufnahmeeinheit (52) angepasst ist, Bilder in zwei zueinander unterschiedlichen Sichtkegeln (54, 55) in dem hinter dem Fahrzeug liegenden Bereich (20) gleichzeitig zu erfassen, eine Bildverarbeitungseinheit (58) vorgesehen ist, die die Bilder derart überlagert, dass ein virtuelles Bild (62) mit einem Sichtkegel (17) erzeugt wird, der dem eines Fahrzeuginnenspiegels bei angenommener unbehinderter Sicht nach hinten aus dem Fahrzeug (10) entspricht, wobei die Sichtkegel (54, 55) der Aufnahmeeinheiten derart sind, dass zumindest in einem der Sichtkegel (55) ein Fahrzeugbezug erfasst und durch die Wiedergabeeinheit (60) angezeigt wird.

7. Heckbereichssichtsystem (50) nach Anspruch 6, wobei die Aufnahmeeinheit (52) einen Multi-Lens-Array umfasst.

8. Heckbereichssichtsystem (50) nach Anspruch 6, wobei die Aufnahmeeinheit (52) je Sichtkegel eine gesonderte Aufnahmebaugruppe (56, 57) enthält.

9. Heckbereichssichtsystem (50) nach einem der Ansprüche 6 bis 8, wobei die erfassten Sichtkegel (54, 55) überlappen.

10. Heckbereichssichtsystem (50) nach einem der Ansprüche 6 bis 9, wobei die Mittelachsen der Sichtkegel (54, 55) in einer Ebene liegen.

11. Heckbereichssichtsystem (50) nach einem der vorhergehenden Ansprüche, **dadurch gekennzeichnet dass** die Wiedergabeeinheit derart angeordnet ist, dass sie auf Höhe der Frankfurter Horizontalen oder darüber für das 95. Perzentil bezüglich der Aughöhe (12) im Sitzen einer Person auf dem Fahrersitz liegt.

12. Heckbereichssichtsystem (50) nach einem der vorhergehenden Ansprüche, **dadurch gekennzeichnet, dass** die Wiedergabeeinheit (60) um einen Drehpunkt verstellbar im Fahrzeug angeordnet ist.

13. Heckbereichssichtsystem (50) nach Anspruch 12, **dadurch gekennzeichnet, dass** die Mittelachse des virtuellen Sichtkegels der Drehposition der Wiedergabeeinheit (60) angepasst ist.

14. Heckbereichssichtsystem (50) nach einem der vorhergehenden Ansprüche, weiter enthaltend eine Kollisionswarneinrichtung, die angepasst ist, ein Hindernis im erfassten Sichtkegel (54) zu erfassen und eine Warnung auszugeben.

## Claims

1. Rear view system (50) for a vehicle comprising
an image capture unit (52) for capturing a sight cone (54) for at least a portion of a region (20) behind the vehicle,
a display unit (60) for displaying the image generated by the image capture unit (52), the display unit (60) visibly displaying an image (62) for the driver of the vehicle,
wherein the system (50) is adapted such that the image generated by the image capture unit (52) and processed by the image processing unit (58) is the image of a virtual sight cone (17) corresponding to an image resulting from a rear view from the vehicle and assumed unhindered sight, and which image is generated of the image of the captured sight cone (54), which image is modified by superimposing or overlaying a virtual vehicle-fixed member into the image generated by the image capture unit (52) and processed by the image processing unit (58) before displaying by the display unit (60), such that the displayed image comprises at least a vehicle reference, such that the driver of the vehicle is enabled to understand and recognize the perspective in which the displayed image is generated, when viewing the image.

2. Rear view system (50) according to claim 1, wherein the modification of the captured image is such that the image processing unit (58) generates a virtual image (62) having a virtual sight cone (17), which corresponds to that of a vehicle interior mirror with assumed unhindered sight to the rear from the vehicle (10).

3. Rear view system (50) according to claim 1 or 2, wherein the image capture unit captures a sight cone (54) opening to the rear, downwards and in lateral direction outwardly from an upper, in lateral direction central rear portion of the vehicle (10).

4. Rear view system (50) according to claim 1 or 2, wherein the image capture unit captures a sight cone (54) opening to the rear, in lateral direction outwardly and upwards and downwards from an in lateral direction central rear portion of the vehicle (10).

5. Rear view system (50) according to any one of the preceding claims, wherein the modification of the captured image is carried out by superimposing a virtual vehicle rear portion (18) or the image of a vehicle rear portion (18).

6. Rear view system (50) according to any one of claims 1 to 4, wherein the modification of the captured image is carried out by the image capture unit (52) being adapted to simultaneously capture images in two sight cones (54, 55) different to each other in the region (20) rear of the vehicle, an image processing unit (58) is provided superimposing the images such that a virtual image (62) comprising a sight cone (17) is generated corresponding to the sight cone of a vehicle interior mirror with assumed unhindered sight to the rear from the vehicle (10), wherein the sight cones (54, 55) of the image capture units are such that at least one sight cone (55) captures a vehicle reference which is displayed by the display unit (60).

7. Rear view system (50) according to claim 6, wherein the image capture unit (52) comprises a multi-lens array.

8. Rear view system (50) according to claim 6, wherein the image capture unit (52) comprises a separate image capture assembly (56, 57) for each sight cone.

9. Rear view system (50) according to any one of claims 6 to 8, wherein the captured sight cones (54, 55) overlap.

10. Rear view system (50) according to any one of claims 6 to 9, wherein the central axis of the sight cones (54, 55) are disposed in one single plane.

11. Rear view system (50) according to any one of the preceding claims, **characterized in that** the display unit is provided in the height of the Frankfurt horizontal plane or above for the 95^{th} percentile regarding the height of the eyes (12) of a person when seated on the driver's seat.

12. Rear view system (50) according to any one of the preceding claims, **characterized in that** the display unit (60) is disposed adjustable around a pivot point in the vehicle.

13. Rear view system (50) according to claim 12, **characterized in that** the central axis of the virtual sight cone is adjusted according to the pivot position of the display unit (60).

14. Rear view system (50) according to any one of the preceding claims, further comprising a collision warning device which is adapted to detect an obstacle in the captured sight cone (54) and to issue a warning.

## Revendications

1. Système de vision de la zone arrière (50) pour un véhicule avec
une unité d'enregistrement (52) pour la réception d'un cône de vision (54) pour au moins une partie d'une zone se trouvant derrière le véhicule (20),
une unité de restitution (60) pour la restitution de l'image générée par l'unité d'enregistrement (52) qui affiche de manière visible une image (62) pour le conducteur du véhicule, le système (50) étant adapté de telle manière que l'image générée par l'unité d'enregistrement (52) et traitée par l'unité de traitement d'image (58) soit une image d'un cône de vision (17) virtuel qui correspond à une image qui apparaît lors d'un regard en arrière depuis le véhicule et de vue sans obstacle supposée, et qui est générée à partir de l'image du cône de vision (54) enregistré, qui est modifiée avant la restitution par l'unité de restitution (60) par superposition ou recouvrement d'un élément virtuel fixé au véhicule dans l'image générée par l'unité d'enregistrement (52) et traitée par l'unité de traitement d'image (58) de telle manière qu'au moins un revêtement de véhicule soit présent dans l'image affichée de sorte qu'il soit permis au conducteur du véhicule, lorsqu'il voit l'image, de comprendre et de percevoir, à partir de quelle perspective l'image affichée est générée.

2. Système de vision de la zone arrière (50) selon la revendication 1, la modification de l'image enregistrée étant telle que l'unité de traitement d'image (58) génère une image virtuelle (62) avec un cône de vision (17) virtuel qui correspond à celui d'un rétroviseur intérieur de véhicule lors d'une vue sans obstacle supposée vers l'arrière à partir du véhicule (10).

3. Système de vision de la zone arrière (50) selon la revendication 1 ou 2, l'unité d'enregistrement détectant un cône de vision (54) qui s'ouvre depuis une zone arrière supérieure, se trouvant au milieu dans la direction latérale du véhicule (10) vers l'intérieur, le bas et dans la direction latérale vers l'extérieur.

4. Système de vision de la zone arrière (50) selon la revendication 1 ou 2, l'unité d'enregistrement détectant un cône de vision (54) qui s'ouvre depuis une zone arrière se trouvant au milieu dans la direction latérale du véhicule (10) vers l'arrière, dans la direction latérale vers l'extérieur et vers le haut et le bas.

5. Système de vision de la zone arrière (50) selon l'une quelconque des revendications précédentes, la modification de l'image enregistrée étant effectuée par le recouvrement d'une zone arrière de véhicule virtuelle (18) ou d'une image d'une zone arrière de véhicule (18).

6. Système de vision de la zone arrière (50) selon l'une quelconque des revendications 1 à 4, la modification de l'image enregistrée se produisant du fait que l'unité d'enregistrement (52) est adaptée afin de détecter simultanément des images dans deux cônes de vision (54, 55) différents l'un de l'autre dans la zone (20) se trouvant derrière le véhicule, une unité de traitement d'image (58) étant prévue, laquelle recouvre les images de telle manière qu'une image virtuelle (62) soit générée avec un cône de vision (17) qui correspond à celui d'un rétroviseur intérieur de véhicule lors d'une vue sans obstacle supposée vers l'arrière depuis le véhicule (10), les cônes de vision (54, 55) des unités d'enregistrement étant tels qu'au moins dans l'un des cônes de vision (55), un revêtement de véhicule soit détecté et affiché par l'unité de restitution (60).

7. Système de vision de la zone arrière (50) selon la revendication 6, l'unité d'enregistrement (52) comportant un agencement multilentilles.

8. Système de vision de la zone arrière (50) selon la revendication 6, l'unité d'enregistrement (52) contenant par cône de vision une structure d'enregistrement (56, 57) séparée.

9. Système de vision de la zone arrière (50) selon l'une quelconque des revendications 6 à 8, les cônes de vision détectés (54, 55) se chevauchant.

10. Système de vision de la zone arrière (50) selon l'une quelconque des revendications 6 à 9, les axes médians des cônes de vision (54, 55) se trouvant dans un plan.

11. Système de vision de la zone arrière (50) selon l'une quelconque des revendications précédentes, **caractérisé en ce que** l'unité de restitution est agencée de telle manière qu'elle se trouve à hauteur du plan horizontal de Frankfort ou au-dessus pour le 95^{e} percentile par rapport à la hauteur des yeux (12) en position assise d'une personne sur le siège de conducteur.

12. Système de vision de la zone arrière (50) selon l'une quelconque des revendications précédentes, **caractérisé en ce que** l'unité de restitution (60) est agencée de manière à pouvoir se déplacer autour d'un point de rotation dans le véhicule.

13. Système de vision de la zone arrière (50) selon la revendication 12, l'axe médian du cône de vision virtuel étant adapté à la position de rotation de l'unité de restitution (60).

14. Système de vision de la zone arrière (50) selon l'une quelconque des revendications précédentes, contenant encore un dispositif d'avertissement de collision qui est adapté afin de détecter un obstacle dans le cône de vision (54) détecté et d'émettre un avertissement.
